# EUROPÄISCHE PATENTSCHRIFT

(11) **EP 3 626 040 B1**
(45) Veröffentlichungstag und Bekanntmachung des Hinweises auf die Patenterteilung: **06.12.2023**
(21) Anmeldenummer: 19184707.8
(22) Anmeldetag: 05.07.2019
(51) Int. Cl.: A01B 79/00, A01B 63/11, B62D 49/06

(54) **LANDWIRTSCHAFTLICHES ARBEITSSYSTEM**
AGRICULTURAL WORK SYSTEM
SYSTÈME DE TRAVAIL AGRICOLE

(30) Priorität: 24.09.2018 DE 102018123476
(43) Veröffentlichungstag der Anmeldung: 25.03.2020
(73) Patentinhaber: CLAAS Tractor S.A.S., 78141 Vélizy-Villacoublay Cedex (FR)
(72) Erfinder: Noyer, Pierre, 81739 München (DE); Ehlert, Christian, 33719 Bielefeld (DE); Wieckhorst, Jan Carsten, 33104 Paderborn (DE); Meyer, Lennart, 52062 Aachen (DE)
(74) Vertreter: CLAAS Gruppe

(56) Entgegenhaltungen:
- EP-A1- 2 009 329
- CA-A1- 3 017 315
- US-A- 4 715 012
- US-A1- 2014 000 919
- US-A1- 2014 343 802

## Beschreibung

Die Erfindung betrifft ein landwirtschaftliches Arbeitssystem mit einer landwirtschaftlichen Arbeitsmaschine gemäß dem Oberbegriff von Anspruch 1, eine landwirtschaftliche Arbeitsmaschine eines solchen Arbeitssystems gemäß dem Oberbegriff von Anspruch 10 sowie ein Verfahren für den Betrieb eines solchen Arbeitssystems gemäß dem Oberbegriff von Anspruch 11.

Das bekannte Arbeitssystem (EP 2 708 103 B1), von dem die Erfindung ausgeht, weist eine Systemsteuerung auf, die basierend auf einem Satz von Eingangsvariablen die für den Betrieb der Arbeitsmaschine erforderlichen Steueraufgaben durchführt. Unter solche Steueraufgaben fällt beispielsweise auch eine Optimierungsfunktion, die aus den jeweils relevanten Eingangsvariablen wie Antriebsleistung und Fahrgeschwindigkeit eine optimierte Ballastierung vorschlägt. Ein weiteres Beispiel ist aus der Offenbarung EP-2009329 bekannt, wobei die Drehmomentvorgabe ausgehend von einem gelernten Wert einsatzabhängig gesteuert wird.

Nachteilig bei dem bekannten Arbeitssystem ist die Tatsache, dass die Werte der einer Steueraufgabe zugrunde liegenden Eingangsvariablen in den seltensten Fällen vollumfänglich und realitätsnah bekannt sind. Eine exakte Ermittlung dieser Werte, die sich oft erst während der Abarbeitung des Arbeitsauftrags ergeben, würde den Bediener - sofern überhaupt möglich - über Gebühr belasten. Der Erfindung liegt das Problem zugrunde, das bekannte Arbeitssystem derart auszugestalten und weiterzubilden, dass die Qualität der Werte für die betreffenden Eingangsvariablen bei hoher Bedienerfreundlichkeit gesteigert wird.

Das obige Problem wird bei einem Arbeitssystem gemäß dem Oberbegriff von Anspruch 1 durch die Merkmale des kennzeichnenden Teils von Anspruch 1 gelöst.

Zunächst einmal ist es vorschlagsgemäß so, dass in einer Zuweisungsroutine die Systemsteuerung den Eingangsvariablen jeweils einen Initialwert zuweist, der in der Systemsteuerung gespeichert ist. Die Systemsteuerung legt dann der Durchführung der Steueraufgaben die Initialwerte der Eingangsvariablen zugrunde, insbesondere sofern für die betreffende Eingangsvariable keine über die Ein-/Ausgabeeinheit eingegebenen Werte existieren. Der einer Eingangsvariable zugeordnete Initialwert übernimmt also die Funktion eines Default-Werts, der mangels anderweitiger Eingabe durch den Bediener der Durchführung der jeweiligen Steueraufgabe zugrunde gelegt wird. Dies ist insoweit vorteilhaft, als jederzeit zumindest ein erster Wert für die jeweilige Eingangsvariable vorliegt, selbst wenn bedienerseitig diesbezüglich überhaupt keine Eingabe gemacht worden ist.

Vorschlagsgemäß ist weiter erkannt worden, dass es sachgerecht ist, die betreffenden Initialwerte in einem Lernvorgang an die jeweils aktuellen Gegebenheiten anzupassen, so dass sich bei geeigneter Auslegung über eine Anzahl von Arbeitsaufträgen eine ständige Verbesserung des Initialwerts ergibt. Im Einzelnen wird vorgeschlagen, dass die Systemsteuerung während der Abarbeitung des Arbeitsauftrags und/oder nach Abschluss des Arbeitsauftrags für mindestens eine Eingangsvariable nach einer Ermittlungsvorschrift einen Wert ermittelt und den für diese Eingangsvariable gespeicherten, alten Initialwert mit dem ermittelten Wert als neuen Initialwert überschreibt.

Mit der vorschlagsgemäßen Lösung besteht die Möglichkeit, dass die Initialwerte für Eingangsvariablen nicht nur einen ersten Anhaltspunkt, sondern unter bestimmten Optimierungskriterien sogar optimierte Initialwerte sind.

Bei der weiter bevorzugten Ausgestaltung gemäß Anspruch 2 ist erkannt worden, dass die Zuordnung eines Initialwerts zu der betreffenden Eingangsvariablen in Abhängigkeit von bestimmten Systemvariablen, wie beispielsweise der Anbaugerätekonfiguration, erfolgt. Dies ist sachgerecht, da sich der betreffende Initialwert mit einer Änderung der Systemvariable regelmäßig verändert, beispielsweise, wenn das Anbaugerät getauscht wird.

Eine datentechnisch besonders einfach umzusetzende Variante besteht gemäß Anspruch 3 darin, dass für eine Eingangsvariable die Abhängigkeit zwischen den zugeordneten Initialwerten und der mindestens einen Systemvariablen in einer Initialwertmatrix abgebildet ist. Am Beispiel einer zweidimensionalen Matrix kann es beispielsweise sein, dass die Spalten jeweils den Werten einer ersten Systemvariablen und die Zeilen den Werten einer zweiten Systemvariablen zugeordnet sind. Das Speichern der für eine Eingangsvariable in Frage kommenden Initialwerte in einer Initialwertmatrix erlaubt eine wenig rechenintensive Umsetzung der vorschlagsgemäßen Lösung.

Die Ermittlung des neuen Initialwerts der betreffenden Ermittlungsvorschrift im Rahmen der Lernroutine basiert vorzugsweise auf den Messwerten einer Messanordnung gemäß Anspruch 4, so dass der Lernvorgang weitgehend automatisiert ablaufen kann. Dies führt zu einer besonders hohen Bedienerfreundlichkeit.

Die weiter bevorzugten Ausgestaltungen gemäß den Ansprüchen 5 und 6 betreffen die Ermittlung des neuen Initialwerts, insbesondere basierend auf dem gespeicherten, alten Initialwert. Im einfachsten Fall wird eine Mittelwertbildung vorgenommen, in welche eine Reihe von Messwerten sowie der alte Initialwert, gegebenenfalls gewichtet, eingehen. Grundsätzlich kann hier auch ein Optimierungsverfahren gemäß Anspruch 6 Anwendung finden, mit dem dafür gesorgt werden kann, dass sich der jeweils neue Initialwert einem unter vorbestimmten Optimierungskriterien optimalen Wert annähert.

Die Werte der Eingangsvariablen können ganz allgemein dafür genutzt werden, nach einer Optimierungsvorschrift eine Ausgangsvariable zu erzeugen (Anspruch 7). Die resultierenden, optimierten Ausgangsvariablen können unmittelbar zur Ansteuerung der Arbeitsmaschine genutzt oder aber an den Bediener ausgegeben werden. Hier wird deutlich, dass die vorschlagsgemäße Lösung für jedwede Steueraufgabe eines landwirtschaftlichen Arbeitssystems Einsatz finden kann.

Beispielhafte Eingangsvariablen sind die Fahrgeschwindigkeit der Arbeitsmaschine und/oder die Antriebsleistung der Arbeitsmaschine, wie in Anspruch 8 vorgeschlagen. Bei der Ausgangsvariablen kann es sich dann beispielsweise um die Ballastierung der Arbeitsmaschine gemäß Anspruch 9 handeln. Um unter Zuhilfenahme der obigen Optimierungsvorschrift eine optimale Ballastierung zu ermitteln, ist die Systemsteuerung auf Werte möglichst hoher Qualität für die Fahrgeschwindigkeit und die Antriebsleistung angewiesen. Aus diesen Werten ergibt sich nämlich die von der Arbeitsmaschine auf den Feldboden zu übertragende Antriebskraft. Die vorschlagsgemäße Lösung kann Initialwerte für beide Eingangsvariablen liefern, die die vorschlagsgemäße Lernroutine bestenfalls bereits mehrfach durchlaufen haben.

Nach einer weiteren Lehre gemäß Anspruch 10, der eigenständige Bedeutung zukommt, wird eine landwirtschaftliche Arbeitsmaschine eines vorschlagsgemäßen, landwirtschaftlichen Arbeitssystems als solche beansprucht, wobei die Systemsteuerung nach dieser weiteren Lehre als Maschinensteuerung ausgestaltet ist, die der Arbeitsmaschine funktional und räumlich zugeordnet ist. Insoweit darf auf alle Ausführungen zu der erstgenannten Lehre verwiesen werden.

Nach einer weiteren Lehre gemäß Anspruch 11, der ebenfalls eigenständige Bedeutung zukommt, wird das beschriebene Verfahren für den Betrieb eines vorschlagsgemäßen, landwirtschaftlichen Arbeitssystems als solches beansprucht.

Wesentlich nach der weiteren Lehre ist in Übereinstimmung mit den beschriebenen Betriebsverfahren zu der erstgenannten Lehre, dass mittels der Systemsteuerung eine vorschlagsgemäße Lernroutine für die betreffenden Eingangsvariablen durchgeführt wird. Auch insoweit darf auf die erstgenannte Lehre verwiesen werden.

Im Folgenden wird die Erfindung anhand einer lediglich ein Ausführungsbeispiel darstellenden Zeichnung näher erläutert. In der Zeichnung zeigt
- Fig. 1: in einer Prinzipdarstellung die wesentlichen Komponenten eines vorschlagsgemäßen landwirtschaftlichen Arbeitssystems mit einer landwirtschaftlichen Arbeitsmaschine einschließlich Anbaugerät in einer Seitenansicht und
- Fig. 2: die für die vorschlagsgemäße Lösung wesentlichen, steuerungstechnischen Zusammenhänge.

Das vorschlagsgemäße landwirtschaftliche Arbeitssystem dient der Abarbeitung eines landwirtschaftlichen Arbeitsauftrags mit einer landwirtschaftlichen Arbeitsmaschine 1. Für die Ausgestaltung der dargestellten Arbeitsmaschine 1 sind zahlreiche Varianten denkbar. Beispielsweise kann es sich bei der Arbeitsmaschine 1 um einen Traktor, einen Hochlader, insbesondere Teleskoplader, um eine selbstfahrende Erntemaschine oder dergleichen handeln.

Die Arbeitsmaschine 1 lässt sich über mindestens eine Geräteschnittstelle 2 mit mindestens einem Anbaugerät 3 bestücken. Bei der Geräteschnittstelle 2 handelt es sich hier ganz allgemein um eine mechanische Kupplung zwischen der Arbeitsmaschine 1 und dem Anbaugerät 3.

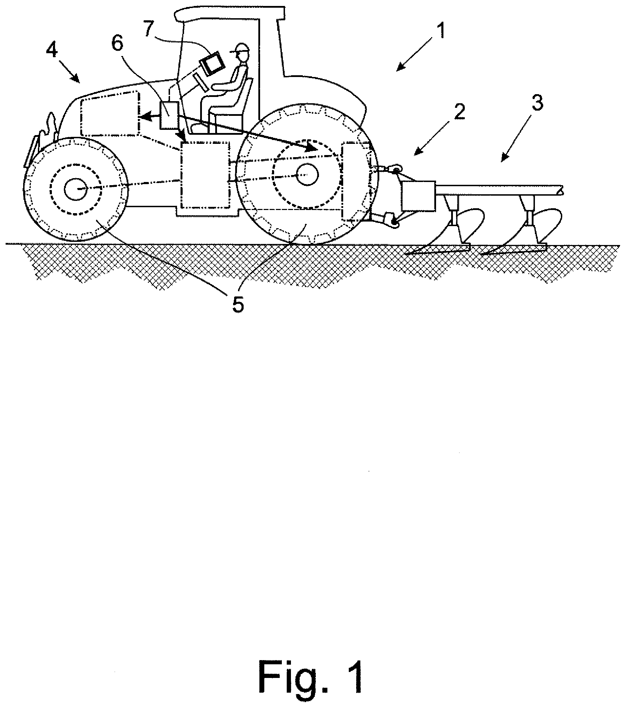

Bei dem Anbaugerät 3 kann es sich beispielsweise um ein Bodenbearbeitungsgerät wie um einen Pflug (Fig. 1), einen Grubber, eine Egge oder dergleichen handeln. Andere Anbaugeräte 3, beispielsweise Heuwerbemaschinen, Saatmaschinen oder dergleichen können hier gleichermaßen zur Anwendung kommen.

Der Arbeitsmaschine 1 ist eine Arbeitsmaschinenkonfiguration KM zugeordnet, während dem Anbaugerät 3 eine Anbaugerätekonfiguration KA zugeordnet ist. Aus den Konfigurationen ergeben sich der Typ der Arbeitsmaschine 1 bzw. des Anbaugeräts 3 sowie die jeweils aktuelle Ausstattungsvariante von Arbeitsmaschine 1 beziehungsweise Anbaugerät 3.

Die Arbeitsmaschine 1 ist mit einer Antriebseinheit 4 ausgestattet, die hier und vorzugsweise einen Verbrennungsmotor aufweist. Die Antriebseinheit 4 wirkt in üblicher Weise über einen Antriebsstrang auf Bodeneingriffselemente, insbesondere auf die hier und vorzugsweise vier Laufräder 5. Vorzugsweise handelt es sich bei der Arbeitsmaschine 1 um eine allradgetriebene Arbeitsmaschine 1, so dass alle vier Laufräder 5 angetrieben bzw. antreibbar sind.

Zur Ansteuerung der antriebsrelevanten Komponenten ist eine Systemsteuerung 6 vorgesehen, bei der es sich hier und vorzugsweise um die Maschinensteuerung der Arbeitsmaschine 1 handelt. Der Arbeitsmaschine 1 ist ferner eine Bedien- und Anzeigeeinheit 7 zugeordnet, die eine Informationsschnittstelle zu dem Bediener der Arbeitsmaschine 1 bereitstellt.

Weiter ist mindestens eine Steuerroutine 8 vorgesehen, in der die Systemsteuerung 6 basierend auf einem Satz von Eingangsvariablen Eₙ vorbestimmte Steueraufgaben durchführt. Vorliegend wird ganz allgemein und nicht beschränkend davon ausgegangen, dass zwei Eingangsvariablen Eₙ existieren, wobei die eine Eingangsvariable Eₙ die Fahrgeschwindigkeit und die andere Eingangsvariable Eₙ die Antriebsleistung der Arbeitsmaschine 1 betreffen.

Der Begriff "Steueraufgabe" ist weit zu verstehen. Er umfasst sowohl Offline-Steueraufgaben, die vor oder nach einem Arbeitsauftrag zu erledigen sind, als auch Online-Steueraufgaben, die während der Abarbeitung des Arbeitsauftrags zu erledigen sind. Eine beispielhafte, weiter unten diskutierte Steueraufgabe ist die Ermittlung einer optimalen Ballastierung der Arbeitsmaschine 1, die -jedenfalls auch - auf den beiden oben genannten Eingangsvariablen E₁ und E₂ basiert. Eine solche Optimierung der Ballastierung der Arbeitsmaschine 1 als solche ist aus dem Stand der Technik bekannt.

Grundsätzlich ist es möglich, dass für mindestens eine Eingangsvariable Eₙ über die Bedien- und Anzeigeeinheit 7 ein Wert eₙ eingebbar ist. Dies ist beispielsweise der Fall, wenn dem Bediener beispielsweise die Fahrgeschwindigkeit der Arbeitsmaschine 1 für die anstehende Abarbeitung des Arbeitsauftrags genau bekannt ist. Andernfalls wird der betreffenden Eingangsvariablen Eₙ ein Default-Wert, also ein Initialwert iₙ, zugewiesen. Im Einzelnen ist es so, dass in einer Zuweisungsroutine 9 die Systemsteuerung 6 den Eingangsvariablen Eₙ jeweils einen Initialwert iₙ zuweist, der in der Systemsteuerung 6 gespeichert ist. Die Systemsteuerung 6 legt der Durchführung der Steueraufgaben die Initialwerte iₙ der Eingangsvariablen Eₙ zugrunde, insbesondere sofern für die betreffende Eingangsvariable Eₙ keine über die Bedien- und Anzeigeeinheit 7 eingegebenen Werte existieren. Vorzugsweise ist es vorgesehen, dass über die Bedien- und Anzeigeeinheit 7 eingegebene Werte eₙ für die Eingangsvariablen Eₙ den jeweiligen Initialwerten iₙ vorgehen.

Um die Qualität der Initialwerte iₙ zu verbessern, ist eine Lernroutine 12 implementiert. Vorschlagsgemäß ermittelt in der Lernroutine 12 die Systemsteuerung 6 aus der Abarbeitung des Arbeitsauftrags für mindestens eine Eingangsvariable Eₙ nach einer Ermittlungsvorschrift 10 einen Wert iₙ' und überschreibt für diese Eingangsvariable Eₙ den gespeicherten, alten Initialwert iₙ mit dem ermittelten Wert iₙ' als neuen Initialwert.

Der Begriff "aus der Abarbeitung des Arbeitsauftrags" ist so zu verstehen, dass Informationen, insbesondere Messwerte, die im Rahmen der Abarbeitung des Arbeitsauftrags generiert worden sind, in die Ermittlung des Werts iₙ' eingehen. Dies ermöglicht eine Optimierung der Initialwerte basierend auf den Erfahrungen aus der Abarbeitung des Arbeitsprozesses.

Die Lernroutine 12 kann während der Abarbeitung des Arbeitsauftrags und/oder nach Abschluss des Arbeitsauftrags durchgeführt werden. Alternativ oder zusätzlich kann es vorgesehen sein, dass zumindest ein Teil der Lernroutine 12 ständig abläuft.

Die Zuweisung eines Initialwerts iₙ zu einer speziellen Eingangsvariablen Eₙ hängt in der Regel von einer ganzen Reihe von Einflussfaktoren ab. Entsprechend sind für mindestens eine Eingangsvariable Eₙ in der Systemsteuerung 6 mehrere Initialwerte gespeichert, von denen die Systemsteuerung 6 der betreffenden Eingangsvariablen Eₙ in Abhängigkeit von mindestens einer Systemvariable S einen Initialwert iₙ zuweist. Bei der mindestens einen Systemvariable S kann es sich beispielsweise um die Antriebsmaschinenkonfiguration KM und/oder um die Anbaugerätekonfiguration KA und/oder um mindestens einen Arbeitsprozessparameter P und/oder um mindestens einen Umgebungsparameter U handeln. Der Arbeitsprozessparameter P betrifft beispielsweise die Eingriffstiefe des Anbaugeräts 3, hier des Pflugs, im Feldboden. Der Umgebungsparameter U betrifft beispielsweise die Feldbodenbeschaffenheit, insbesondere den Feldbodenbewuchs oder die Feldbodenfeuchtigkeit.

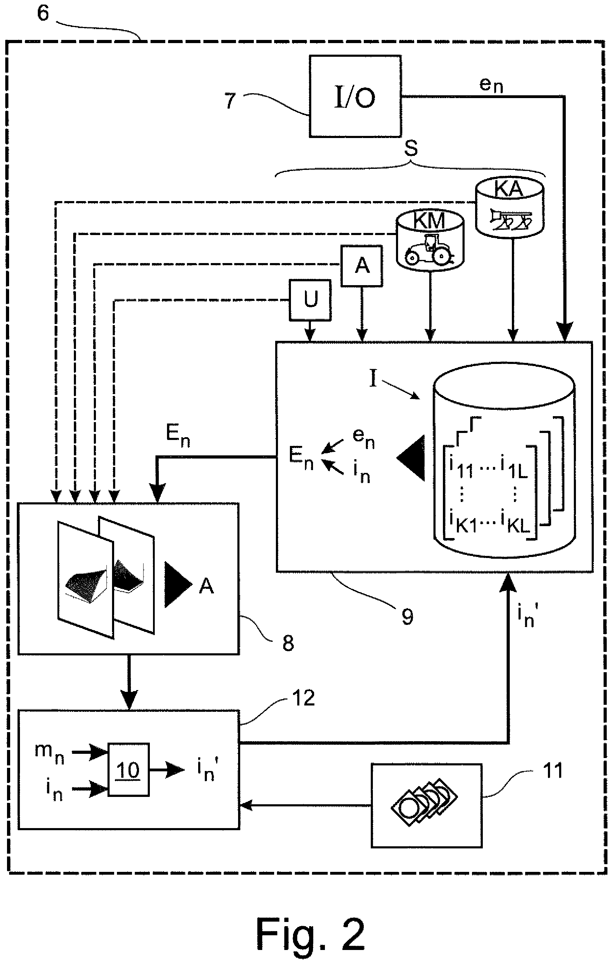

Die Zuweisung eines Initialwerts iₙ zu einer Eingangsvariablen Eₙ ist also abhängig von mindestens einer Systemvariablen S. In Abhängigkeit von den Werten der mindestens einen Systemvariablen S wird einer der für diese Eingangsvariable Eₙ gespeicherten Initialwerte in der Zuweisungsroutine ausgewählt und der Eingangsvariablen Eₙ zugewiesen. Die Abhängigkeit zwischen den zugeordneten Initialwerten und der mindestens einen Systemvariablen S erfolgt vorzugsweise in einer Initialwertmatrix I, die in Fig. 2 lediglich angedeutet ist.

In Fig. 2 handelt es sich bei der Initialwertmatrix um eine zweidimensionale Matrix, die einem Paar von Systemvariablen S jeweils einen Initialwert zuordnet. Dabei entsprechen die Spalten der Initialwertmatrix I verschiedenen Werten einer ersten Systemvariable S, beispielsweise der Anbaugerätekonfiguration KA, während die Zeilen der Initialwertmatrix I verschiedenen Werten für eine weitere Systemvariable S, beispielsweise der Bodenbeschaffenheit, entsprechen. Diese zweidimensionale Initialwertmatrix I ist hier lediglich zur besseren Übersichtlichkeit gewählt worden. In der Praxis wird die Initialwertmatrix I regelmäßig mehr als zwei Dimensionen aufweisen, da die Auswahl des einer Eingangsvariablen Eₙ zuzuweisenden Initialwerts iₙ regelmäßig von mehr als zwei Systemvariablen S abhängig ist.

Die Systemsteuerung 6 weist vorzugsweise eine Messanordnung 11, hier und vorzugsweise eine Sensoranordnung, zur Ermittlung mindestens eines Messwerts mₙ für mindestens eine Eingangsvariable Eₙ auf. In besonders bevorzugter Ausgestaltung können hiermit während der Abarbeitung des Arbeitsauftrags Messwerte mₙ gesammelt werden, auf deren Basis in der Lernroutine 12 nach der Ermittlungsvorschrift neue Initialwerte iₙ' ermittelt werden können. Weiter vorzugsweise ist es so, dass in der Lernroutine 12 neue Initialwerte iₙ' nach der Ermittlungsvorschrift aus dem mindestens einen Messwert mₙ der Messanordnung 11 und gegebenenfalls dem alten Initialwert iₙ ermittelt werden.

Die Art und Weise der Ermittlung des neuen Initialwerts iₙ' kann nach der Ermittlungsvorschrift 10 in ganz unterschiedlichen Varianten vorgesehen sein. Ganz allgemein ermittelt die Systemsteuerung 6 den neuen Initialwert iₙ' nach der Ermittlungsvorschrift 10 basierend auf einem arithmetischen und/oder statistischen Verfahren. In besonders bevorzugter Ausgestaltung findet hier eine Mittelwertbildung aus dem mindestens einen Messwert mₙ und gegebenenfalls dem in der Systemsteuerung 6 gespeicherten, alten Initialwert iₙ Anwendung. Alternativ oder zusätzlich kann es aber auch vorgesehen sein, dass die Systemsteuerung 6 den neuen Initialwert iₙ' nach der Ermittlungsvorschrift 10 basierend auf einem Optimierungsverfahren aus dem mindestens einen Messwert mₙ und gegebenenfalls dem alten Initialwert iₙ ermittelt.

Für die Ausgestaltung der Steuerroutine 8 sind ebenfalls zahlreiche vorteilhafte Varianten denkbar. Hier und vorzugsweise ist es so, dass die Systemsteuerung 6 nach einer Optimierungsvorschrift basierend auf den Eingangsvariablen Eₙ eine Ausgangsvariable A erzeugt. In einer ersten Alternative erfolgt die Ansteuerung der Arbeitsmaschine 1 dann basierend auf der erzeugten Ausgangsvariablen A. In einer zweiten Alternative wird die erzeugte Ausgangsvariable A über die Bedien- und Anzeigeeinheit 7 ausgegeben, so dass der Bediener darauf basierend eigenständige Parametereinstellungen vornehmen kann.

Wie weiter oben angesprochen, kann es sich bei einer Eingangsvariablen Eₙ um die Fahrgeschwindigkeit der Arbeitsmaschine 1 handeln, während es sich, alternativ oder zusätzlich, bei einer weiteren Eingangsvariable Eₙ um die Antriebsleistung der Arbeitsmaschine 1 handeln kann. Andere Arten der Eingangsvariablen sind denkbar.

Die Ausgangsvariable A kann beispielsweise die Ballastierung der Arbeitsmaschine 1 und/oder die Reifendrücke der insbesondere als Luftreifen ausgestalteten Laufräder der Arbeitsmaschine 1 betreffen. Andere Ausgangsvariablen A sind in Abhängigkeit von der jeweiligen Optimierungsvorschrift denkbar.

Eine beispielhafte und nicht beschränkende Anwendung der vorschlagsgemäßen Lösung wird im Folgenden kurz diskutiert. In dem Beispiel ist in der Steuerroutine 8 vorgesehen, als Ausgangsvariable A eine optimierte Ballastierung der Arbeitsmaschine 1 zu erzeugen. Hierfür sind eine Reihe von Eingangsvariablen erforderlich, u.a. die Ermittlung der Fahrgeschwindigkeit und der Antriebsleistung der Arbeitsmaschine 1. Beide Werte leiten sich von der Arbeitsmaschinenkonfiguration KM, der Anbaugerätekonfiguration KA, von Arbeitsprozessparametern P und von Umgebungsparametern U ab. Die Ermittlung dieser Informationen kann beispielsweise durch den Bediener über die Bedien- und Anzeigeeinheit 7, Datenbank-basiert, oder dergleichen erfolgen. In der Zuweisungsroutine 9 wird für die beiden Eingangsvariablen Eₙ der Fahrgeschwindigkeit und der Antriebsleistung aus der Initialwertmatrix I ein Initialwert iₙ für die betreffende Eingangsvariable Eₙ ermittelt und dieser Eingangsvariablen Eₙ zugewiesen. Daraufhin erzeugt die Systemsteuerung 6 in der Steuerroutine 8 basierend auf den obigen Eingangsvariablen Eₙ und basierend auf der obigen Optimierungsvorschrift eine Ausgangsvariable A, die eine optimale Ballastierung der Arbeitsmaschine 1 repräsentiert. Der Bediener stellt daraufhin die in der Steuerroutine 8 vorgeschlagene Ballastierung ein und nimmt die Abarbeitung des Arbeitsauftrags vor.

Während des Arbeitsauftrags wird über die Messanordnung 11 der Arbeitsmaschine 1, hier über einen Fahrgeschwindigkeitssensor, festgestellt, dass die Fahrgeschwindigkeit einen Wert unterhalb des der Fahrgeschwindigkeit in der Zuweisungsroutine zugewiesenen Initialwerts aufweist. Daraufhin wird in der Lernroutine 12 nach der Ermittlungsvorschrift 10 ein Wert iₙ' für die Fahrgeschwindigkeit ermittelt, der beispielsweise auf eine Mittelwertbildung zwischen dem Messwert mₙ und dem in der Systemsteuerung 6 gespeicherten, alten Initialwert iₙ zurückgeht. Es versteht sich, dass anstelle des einen Messwerts mₙ vorzugsweise eine Schar von Messwerten in die Mittelwertbildung eingehen kann.

Bei der nächsten Abarbeitung wird die Steuerroutine 8 basierend auf dem neuen Initialwert ablaufen, der dem tatsächlichen Arbeitsprozess besser entspricht und damit von besserer Qualität ist. Damit ergibt sich ein besseres Ergebnis bei der Durchführung der Steuerroutine 8, hier bei der Ermittlung einer optimierten Ballastierung.

Vorzugsweise ist die Systemsteuerung 6 eingerichtet, die Anbaugerätekonfiguration KA zu ermitteln. Diese Ermittlung kann grundsätzlich auf eine Bedienereingabe zurückgehen. Denkbar ist aber auch, dass beim Bestücken der Arbeitsmaschine 1 mit dem Anbaugerät 3 ein automatisierter Datenaustausch stattfindet, der auch die Übermittlung der Anbaugerätekonfiguration KA umfasst. Auch die anderen, gegebenenfalls erforderlichen Systemvariablen S lassen sich je nach Ausstattung der Arbeitsmaschine 1 über eine Bedienereingabe und/oder automatisiert, insbesondere sensorbasiert, ermitteln.

Nach einer weiteren Lehre, der eigenständige Bedeutung zukommt, wird die landwirtschaftliche Arbeitsmaschine 1 als solche beansprucht, wobei die Systemsteuerung 6 insgesamt als Maschinensteuerung der Arbeitsmaschine 1 ausgestaltet ist. Die Arbeitsmaschine 1 ist mangels dezentraler Steuerungsstruktur also steuerungstechnisch autark ausgebildet. Auf alle Ausführungen zu der erstgenannten Lehre darf verwiesen werden.

Nach einer weiteren Lehre, der ebenfalls eigenständige Bedeutung zukommt, wird ein Verfahren für den Betrieb des vorschlagsgemäßen landwirtschaftlichen Arbeitssystems als solche beansprucht. Auch insoweit darf auf die Ausführungen zu der erstgenannten Lehre verwiesen werden.

### Bezugszeichenliste

- 1: Arbeitsmaschine
- 2: Geräteschnittstelle
- 3: Anbaugerät
- 4: Antriebseinheit
- 5: Laufräder
- 6: Systemsteuerung
- 7: Bedien- und Anzeigeeinheit
- 8: Steuerroutine
- 9: Zuweisungsroutine
- 10: Ermittlungsvorschrift
- 11: Messanordnung
- 12: Lernroutine

- KM: Arbeitsmaschinenkonfiguration
- KA: Anbaugerätekonfiguration
- Eₙ: Eingangsvariable
- eₙ: eingegebener Wert
- iₙ: Initialwert
- iₙ': neuer Initialwert
- mₙ: Messwert
- I: Initialmatrix
- S: Systemvariable
- P: Arbeitsprozessparameter
- U: Umgebungsparameter
- A: Ausgangsvariable

## Patentansprüche

1. Landwirtschaftliches Arbeitssystem zur Abarbeitung eines landwirtschaftlichen Arbeitsauftrags mit einer landwirtschaftlichen Arbeitsmaschine (1), die über mindestens eine Geräteschnittstelle (2) mit mindestens einem Anbaugerät (3) bestückbar ist, wobei der Arbeitsmaschine (1) eine Arbeitsmaschinenkonfiguration (KM) zugeordnet ist, wobei dem Anbaugerät (3) eine Anbaugerätekonfiguration (KA) zugeordnet ist,
wobei die Arbeitsmaschine (1) mit einer Antriebseinheit (4) ausgestattet ist, die über einen Antriebsstrang auf Bodeneingriffselemente der Arbeitsmaschine (1), vorzugsweise auf Laufräder (5), wirkt und wobei eine Systemsteuerung (6) und eine der Arbeitsmaschine (1) zugeordnete Bedien- und Anzeigeeinheit (7) vorgesehen sind,
wobei in einer Steuerroutine (8) die Systemsteuerung (6) basierend auf einem Satz von Eingangsvariablen (Eₙ) vorbestimmte Steueraufgaben durchführt, wobei über die Bedien- und Anzeigeeinheit (7) für mindestens eine Eingangsvariable (Eₙ) ein Wert eingebbar ist,
wobei in einer Zuweisungsroutine (9) die Systemsteuerung (6) den Eingangsvariablen (Eₙ) jeweils einen Initialwert (iₙ) zuweist, der in der Systemsteuerung (6) gespeichert ist,
wobei die Systemsteuerung (6) der Durchführung der Steueraufgaben die Initialwerte (iₙ) der Eingangsvariablen (Eₙ) zugrunde legt, insbesondere sofern für die betreffende Eingangsvariable (Eₙ) keine über die Bedien- und Anzeigeeinheit (7) eingegebenen Werte (eₙ) existieren,
**dadurch gekennzeichnet,**
**dass** in einer Lernroutine (12) nach Abschluss des Arbeitsauftrags die Systemsteuerung (7) aus der Abarbeitung des Arbeitsauftrags für mindestens eine Eingangsvariable (Eₙ) nach einer Ermittlungsvorschrift einen Wert (iₙ') ermittelt und den für diese Eingangsvariable (Eₙ) gespeicherten, alten Initialwert (iₙ) mit dem ermittelten Wert (iₙ') als neuen Initialwert überschreibt.

2. Arbeitssystem nach Anspruch 1, **dadurch gekennzeichnet, dass** für mindestens eine Eingangsvariable (Eₙ) in der Systemsteuerung (6) mehrere Initialwerte gespeichert sind, von denen die Systemsteuerung (6) in der Zuweisungsroutine (9) der betreffenden Eingangsvariable (Eₙ) in Abhängigkeit von mindestens einer Systemvariablen (S), insbesondere der Arbeitsmaschinenkonfiguration (KM) und/oder der Anbaugerätekonfiguration (KA) und/oder mindestens eines Arbeitsprozessparameters (A), vorzugsweise der Eingriffstiefe im Feldboden, und/oder mindestens eines Umgebungsparameters (U), vorzugsweise der Feldbodenbeschaffenheit, weiter vorzugsweise des Feldbodenbewuchses oder der Feldbodenfeuchtigkeit, einen Initialwert (iₙ) zuweist.

3. Arbeitssystem nach Anspruch 2, **dadurch gekennzeichnet, dass** für eine Eingangsvariable (Eₙ) die Abhängigkeit zwischen den zugeordneten Initialwerten und der mindestens einen Systemvariablen (S) in einer Initialwertmatrix (I) abgebildet ist.

4. Arbeitssystem nach einem der vorhergehenden Ansprüche, **dadurch gekennzeichnet, dass** die Systemsteuerung (6) eine Messanordnung (11), insbesondere eine Sensoranordnung, zur Ermittlung mindestens eines Messwerts (mₙ) für mindestens eine Eingangsvariable (Eₙ) aufweist und in der Lernroutine (12) den neuen Initialwert (iₙ') nach der Ermittlungsvorschrift aus dem mindestens einen Messwert (mₙ) der Messanordnung (11) und gegebenenfalls dem alten Initialwert (iₙ) ermittelt.

5. Arbeitssystem nach einem der vorhergehenden Ansprüche, **dadurch gekennzeichnet, dass** in der Lernroutine (12) die Systemsteuerung (6) den neuen Initialwert (iₙ') nach der Ermittlungsvorschrift basierend auf einem arithmetischen und/oder statistischen Verfahren, vorzugsweise basierend auf einer Mittelwertbildung aus dem mindestens einen Messwert (mₙ) und ggf. dem alten Initialwert (iₙ), ermittelt.

6. Arbeitssystem nach einem der vorhergehenden Ansprüche, **dadurch gekennzeichnet, dass** in der Lernroutine (12) die Systemsteuerung (6) den neuen Initialwert (iₙ') nach der Ermittlungsvorschrift basierend auf einem Optimierungsverfahren aus dem mindestens einen Messwert (mₙ) und ggf. dem alten Initialwert (iₙ) ermittelt.

7. Arbeitssystem nach einem der vorhergehenden Ansprüche, **dadurch gekennzeichnet, dass** in der Steuerroutine (8) die Systemsteuerung (6) nach einer Optimierungsvorschrift basierend auf den Eingangsvariablen (Eₙ) eine Ausgangsvariable (A) erzeugt und die Ansteuerung der Arbeitsmaschine (1) basierend auf der Ausgangsvariable (A) vornimmt oder die Ausgangsvariable (A) über die Bedien- und Anzeigeeinheit (7) ausgibt.

8. Arbeitssystem nach einem der vorhergehenden Ansprüche, **dadurch gekennzeichnet, dass** eine Eingangsvariable (Eₙ) die Fahrgeschwindigkeit der Arbeitsmaschine (1) betrifft, und/oder, dass eine Eingangsvariable (Eₙ) die Antriebsleistung der Arbeitsmaschine (1) betrifft.

9. Arbeitssystem nach Anspruch 7 und ggf. nach Anspruch 8, **dadurch gekennzeichnet, dass** die Ausgangsvariable (A) die Ballastierung der Arbeitsmaschine (1) und/oder die Reifendrücke der insbesondere als Luftreifen ausgestalteten Laufräder (5) der Arbeitsmaschine (1) betrifft.

10. Verfahren für den Betrieb eines landwirtschaftlichen Arbeitssystems (1) zur Abarbeitung eines landwirtschaftlichen Arbeitsauftrags, insbesondere eines landwirtschaftlichen Arbeitssystems nach einem der Ansprüche 1 bis 10, wobei das Arbeitssystem eine landwirtschaftliche Arbeitsmaschine (1) aufweist, die über mindestens eine Geräteschnittstelle (2) mit mindestens einem Anbaugerät (3) bestückbar ist, wobei der Arbeitsmaschine (1) eine Arbeitsmaschinenkonfiguration (KM) zugeordnet ist, wobei dem Anbaugerät (3) eine Anbaugerätekonfiguration (KA) zugeordnet ist,
wobei die Arbeitsmaschine (1) mit einer Antriebseinheit (4) ausgestattet ist, die über einen Antriebsstrang auf Bodeneingriffselemente der Arbeitsmaschine (1), vorzugsweise auf Laufräder (5), wirkt und wobei eine Systemsteuerung (6) und eine der Arbeitsmaschine (1) zugeordnete Bedien- und Anzeigeeinheit (7) vorgesehen sind,
wobei in einer Steuerroutine (8) die Systemsteuerung (6) basierend auf einem Satz von Eingangsvariablen (Eₙ) vorbestimmte Steueraufgaben durchführt, wobei über die Bedien- und Anzeigeeinheit (7) für mindestens eine Eingangsvariable (Eₙ) ein Wert (eₙ) eingebbar ist,
wobei in einer Zuweisungsroutine (9) die Systemsteuerung (6) den Eingangsvariablen (Eₙ) jeweils einen Initialwert (iₙ) zuweist, der in der Systemsteuerung (6) gespeichert ist,
wobei die Systemsteuerung (6) der Durchführung der Steueraufgaben die Initialwerte (iₙ) der Eingangsvariablen (Eₙ) zugrunde legt, insbesondere sofern für die betreffende Eingangsvariable (Eₙ) keine über die Bedien- und Anzeigeeinheit (7) eingegebenen Werte existieren,
**dadurch gekennzeichnet,**
**dass** in einer Lernroutine (12) nach Abschluss des Arbeitsauftrags die Systemsteuerung (6) aus der Abarbeitung des Arbeitsauftrags für mindestens eine Eingangsvariable (Eₙ) nach einer Ermittlungsvorschrift einen Wert (iₙ') ermittelt und den für diese Eingangsvariable (Eₙ) gespeicherten, alten Initialwert (iₙ) mit dem ermittelten Wert (iₙ') als neuen Initialwert überschreibt.

## Claims

1. An agricultural operational system for executing an agricultural operational assignment, with an agricultural working machine (1) which can be fitted with at least one attachment (3) via at least one implement interface (2), wherein a working machine configuration (KM) is associated with the working machine (1), wherein an attachment configuration (KA) is associated with the attachment (3),
wherein the working machine (1) is equipped with a drive unit (4) which acts on ground engaging elements, preferably on running wheels (5), of the working machine (1) via a drive train, and wherein a system controller (6) and an operating and display unit (7) associated with the working machine (1) are provided,
wherein in a control routine (8), the system controller (6) carries out predetermined control functions based on a set of input variables (Eₙ), wherein a value for at least one input variable (Eₙ) can be input via the operating and display unit (7),
wherein in an allocation routine (9), the system controller (6) allocates to the input variables (Eₙ) a respective initial value (iₙ) which is stored in the system controller (6),
wherein the system controller (6) takes the initial values (iₙ) of the input variables (Eₙ) as the basis for carrying out the control functions, in particular if no values (eₙ) input via the operating and display unit (7) exist for the relevant input variable (Eₙ),
**characterized in that**
after completion of the operational assignment, in a learning routine (12), the system controller (7) determines from the execution of the operational assignment a value (iₙ') for at least one input variable (Eₙ) in accordance with a determination rule and overwrites the old initial value (iₙ) stored for this input variable (Eₙ) with the determined value (iₙ') as the new initial value.

2. The operational system according to claim 1, **characterized in that** for at least one input variable (Eₙ), a plurality of initial values are stored in the system controller (6) from which, in the allocation routine (9), the system controller (6) allocates an initial value (iₙ) for the relevant input variable (Eₙ) as a function of at least one system variable (S), in particular of the working machine configuration (KM) and/or of the attachment configuration (KA) and/or of at least one working procedure parameter (A), preferably the penetration depth into the field soil, and/or at least one environmental parameter (U), preferably the field soil conditions, more preferably the field soil vegetation or the field soil moisture.

3. The operational system according to claim 2, **characterized in that** for an input variable (Eₙ), the dependency between the associated initial values and the at least one system variable (S) is represented in an initial value matrix (I).

4. The operational system according to one of the preceding claims, **characterized in that** the system controller (6) has a measuring assembly (11), in particular a sensor assembly, for determining at least one measured value (mₙ) for at least one input variable (Eₙ) and in the learning routine (12), it determines the new initial value (iₙ') in accordance with the determination rule from the at least one measured value (mₙ) from the measuring assembly (11) and, if appropriate, from the old initial value (iₙ).

5. The operational system according to one of the preceding claims, **characterized in that** in the learning routine (12), the system controller (6) determines the new initial value (iₙ') in accordance with the determination rule based on an arithmetic and/or statistical method, preferably based on averaging from the at least one measured value (mₙ) and, if appropriate, from the old initial value (iₙ).

6. The operational system according to one of the preceding claims, **characterized in that** in the learning routine (12), the system controller (6) determines the new initial value (iₙ') in accordance with the determination rule based on an optimization method from the at least one measured value (mₙ) and, if appropriate, the old initial value (iₙ).

7. The operational system according to one of the preceding claims, **characterized in that** in the control routine (8), the system controller (6) produces an output variable (A) in accordance with an optimization rule based on the input variables (Eₙ) and carries out the control of the working machine (1) based on the output variable (A) or outputs the output variable (A) via the operating and display unit (7).

8. The operational system according to one of the preceding claims, **characterized in that** an input variable (Eₙ) relates to the travel speed of the working machine (1), and/or **in that** an input variable (Eₙ) relates to the drive power of the working machine (1).

9. The operational system according to claim 7 and, if appropriate, to claim 8, **characterized in that** the output variable (A) relates to the ballasting of the working machine (1) and/or the tyre pressures, in particular of the running wheels (5) of the working machine (1) which are in the form of pneumatic tyres.

10. A method for operating an agricultural operational system (1) for executing an agricultural operational assignment, in particular an agricultural operational system according to one of claims 1 to 10, wherein the operational system has an agricultural working machine (1) which can be fitted with at least one attachment (3) via at least one implement interface (2), wherein a working machine configuration (KM) is associated with the working machine (1), wherein an attachment configuration (KA) is associated with the attachment (3),
wherein the working machine (1) is equipped with a drive unit (4) which acts on ground engaging elements, preferably on running wheels (5), of the working machine (1) via a drive train, and wherein a system controller (6) and an operating and display unit (7) associated with the working machine (1) are provided,
wherein in a control routine (8), the system controller (6) carries out predetermined control functions based on a set of input variables (Eₙ), wherein a value for at least one input variable (Eₙ) can be input via the operating and display unit (7),
wherein in an allocation routine (9), the system controller (6) allocates to the input variables (Eₙ) a respective initial value (iₙ) which is stored in the system controller (6),
wherein the system controller (6) takes the initial values (iₙ) of the input variables (Eₙ) as the basis for carrying out the control functions, in particular if no values input via the operating and display unit (7) exist for the relevant input variable (Eₙ),
**characterized in that**
after completion of the operational assignment, in a learning routine (12), the system controller (7) determines from the execution of the operational assignment a value (iₙ') for at least one input variable (Eₙ) in accordance with a determination rule and overwrites the old initial value (iₙ) stored for this input variable (Eₙ) with the determined value (iₙ') as the new initial value.

## Revendications

1. Système de travail agricole destiné à l'exécution d'une instruction de travail agricole avec une machine de travail agricole (1) qui peut être équipée d'au moins un outil attelé (3) par l'intermédiaire d'au moins une interface d'outil (2), une configuration de machine de travail (KM) étant associée à la machine de travail (1), une configuration d'outil attelé (KA) étant associée à l'outil attelé (3),
la machine de travail (1) étant équipée d'une unité d'entraînement (4) qui agit via une ligne d'entraînement sur des éléments de prise au sol de la machine de travail (1), de préférence sur des roues porteuses (5), et un dispositif de contrôle de système (6) et une unité de commande et d'affichage (7), associée à la machine de travail (1), étant prévus,
le dispositif de contrôle de système (6) exécutant, dans une routine de contrôle (8), des tâches de contrôle prédéfinies, sur la base d'un ensemble de variables d'entrée (Eₙ),
une valeur pouvant être saisie pour au moins une variable d'entrée (Eₙ), par l'intermédiaire de l'unité de commande et d'affichage (7),
le dispositif de contrôle de système (6) affectant aux variables d'entrée (Eₙ), dans une routine d'affectation (9), respectivement une valeur initiale (iₙ) qui est enregistrée dans le dispositif de contrôle de système (6),
le dispositif de contrôle de système (6) fondant l'exécution des tâches de contrôle sur les valeurs initiales (iₙ) des variables d'entrée (Eₙ), notamment dans la mesure où il n'existe pour la variable d'entrée (Eₙ) concernée pas de valeurs (eₙ) saisies via l'unité de commande et d'affichage (7),
**caractérisé en ce que**
à la fin de l'instruction de travail, le dispositif de contrôle de système (6) détermine, dans une routine d'apprentissage (12), à partir de l'exécution de l'instruction de travail, une valeur (iₙ') pour au moins une variable d'entrée (Eₙ), selon une consigne de détermination, et remplace l'ancienne valeur initiale (iₙ), enregistrée pour cette variable d'entrée (Eₙ), par la valeur (iₙ') déterminée, en tant que nouvelle valeur initiale.

2. Système de travail selon la revendication 1, **caractérisé en ce que** pour au moins une variable d'entrée (Eₙ), plusieurs valeurs initiales sont enregistrées dans le dispositif de contrôle de système (6), parmi lesquelles le dispositif de contrôle de système (6) affecte, dans la routine d'affectation (9), une valeur initiale (iₙ) à la variable d'entrée (Eₙ) concernée, en fonction d'au moins une variable de système (S), notamment de la configuration de machine de travail (KM) et/ou de la configuration d'outil attelé (KA) et/ou d'au moins un paramètre de processus de travail (A), de préférence de la profondeur de pénétration dans le sol du champ, et/ou d'au moins un paramètre d'environnement (U), de préférence de la nature du sol du champ, notamment de préférence de la végétation du sol du champ ou de l'humidité du sol du champ.

3. Système de travail selon la revendication 2, **caractérisé en ce que** pour une variable d'entrée (Eₙ), la dépendance entre les valeurs initiales associées et la variable de système (S), au nombre d'au moins une, est représentée dans une matrice de valeurs initiales (I).

4. Système de travail selon l'une des revendications précédentes, **caractérisé en ce que** le dispositif de contrôle de système (6) présente un dispositif de mesure (11), notamment un dispositif capteur, destiné à déterminer au moins une valeur de mesure (mₙ) pour au moins une variable d'entrée (Eₙ), et détermine, dans la routine d'apprentissage (12), la nouvelle valeur initiale (iₙ') selon la consigne de détermination, à partir de la valeur de mesure (mₙ), au nombre d'au moins une, du dispositif de mesure (11) et le cas échéant de l'ancienne valeur initiale (iₙ).

5. Système de travail selon l'une des revendications précédentes, **caractérisé en ce que** dans la routine d'apprentissage (12), le dispositif de contrôle de système (6) détermine la nouvelle valeur initiale (iₙ') selon la consigne de détermination, sur la base d'une méthode arithmétique et/ou statistique, de préférence sur la base d'un calcul de valeur moyenne à partir de la valeur de mesure (mₙ), au nombre d'au moins une, et le cas échéant de l'ancienne valeur initiale (iₙ).

6. Système de travail selon l'une des revendications précédentes, **caractérisé en ce que** dans la routine d'apprentissage (12), le dispositif de contrôle de système (6) détermine la nouvelle valeur initiale (iₙ') selon la consigne de détermination, sur la base d'une méthode d'optimisation, à partir de la valeur de mesure (mₙ), au nombre d'au moins une, et le cas échéant de l'ancienne valeur initiale (iₙ).

7. Système de travail selon l'une des revendications précédentes, **caractérisé en ce que** dans la routine de contrôle (8), le dispositif de contrôle de système (6) génère une variable de sortie (A) selon une consigne d'optimisation, sur la base des variables d'entrée (Eₙ), et procède à l'activation de la machine de travail (1), sur la base de la variable de sortie (A), ou délivre la variable de sortie (A) par l'intermédiaire de l'unité de commande et d'affichage (7).

8. Système de travail selon l'une des revendications précédentes, **caractérisé en ce qu'**une variable d'entrée (Eₙ) concerne la vitesse d'avancement de la machine de travail (1), et/ou **en ce qu'**une variable d'entrée (Eₙ) concerne la puissance motrice de la machine de travail (1).

9. Système de travail selon la revendication 7 et le cas échéant selon la revendication 8, **caractérisé en ce que** la variable de sortie (A) concerne le lestage de la machine de travail (1) et/ou les pressions de pneu des roues (5) de la machine de travail (1) qui sont réalisées notamment sous forme de pneus pneumatiques.

10. Procédé pour faire fonctionner un système de travail agricole (1) destiné à exécuter une instruction de travail agricole, en particulier un système de travail agricole conforme à l'une des revendications 1 à 10, selon lequel le système de travail présente une machine de travail (1) agricole qui peut être équipée d'au moins un outil attelé (3) par l'intermédiaire d'au moins une interface d'outil (2), une configuration de machine de travail (KM) étant associée à la machine de travail (1), une configuration d'outil attelé (KA) étant associée à l'outil attelé (3),
la machine de travail (1) étant équipée d'une unité d'entraînement (4) qui agit par l'intermédiaire une ligne d'entraînement sur des éléments de prise au sol de la machine de travail (1), de préférence sur des roues (5), et un dispositif de contrôle de système (6) et une unité de commande et d'affichage (7), associée à la machine de travail (1), étant prévus,
le dispositif de contrôle de système (6) exécutant, dans une routine de contrôle (8), des tâches de contrôle prédéfinies, sur la base d'un ensemble de variables d'entrée (Eₙ),
une valeur (eₙ) pouvant être saisie pour au moins une variable d'entrée (Eₙ), par l'intermédiaire de l'unité de commande et d'affichage (7),
le dispositif de contrôle de système (6) affectant aux variables d'entrée (Eₙ), dans une routine d'affectation (9), respectivement une valeur initiale (iₙ) qui est enregistrée dans le dispositif de contrôle de système (6),
le dispositif de contrôle de système (6) fondant l'exécution des tâches de contrôle sur les valeurs initiales (iₙ) des variables d'entrée (Eₙ), notamment dans la mesure où il n'existe pour la variable d'entrée (Eₙ) concernée pas de valeurs saisies via l'unité de commande et d'affichage (7),
**caractérisé en ce que**
après l'achèvement de l'instruction de travail, le dispositif de contrôle de système (6) détermine, dans une routine d'apprentissage (12), à partir de l'exécution de l'instruction de travail, une valeur (iₙ') pour au moins une variable d'entrée (Eₙ), selon une consigne de détermination, et remplace l'ancienne valeur initiale (iₙ), enregistrée pour cette variable d'entrée (Eₙ), par la valeur (iₙ') déterminée, en tant que nouvelle valeur initiale.
